# EUROPÄISCHE PATENTANMELDUNG

(11) **EP 1 923 716 A1**
(43) Veröffentlichungstag der Anmeldung: **21.05.2008**
(21) Anmeldenummer: 07117215.9
(22) Anmeldetag: 26.09.2007
(51) Int. Cl.: G01S 7/524, G01S 15/10, G01S 15/93

(54) **Abstandsmessverfahren und Abstandsmessvorrichtung**

(30) Priorität: 20.11.2006 DE 102006054605
(71) Anmelder: ROBERT BOSCH GMBH, 70442 Stuttgart (DE)
(72) Erfinder: Renner, Matthias, 71263 Weil Der Stadt (DE)

(57) **Zusammenfassung**

Die vorliegende Erfindung schafft eine Abstandsmessvorrichtung. Eine kombinierten Sende- und Empfangseinrichtung 4 dient zum Generieren und Aussenden eines Schallpulses für ein Echoverfahren. Eine Steuereinrichtung 4, 8 mit einem einstellbaren Verstärkungs- oder Abschwächungsglied 4 dient zum Einstellen der Ausgangsleistung des Schallpulses 10 in Abhängigkeit eines zu untersuchenden Abstandbereichs von Abständen d zwischen der kombinierten Sende- und Empfangseinrichtung 4 und einem Objekt 2. Eine Auswertungseinrichtung 7 dient zum Bestimmen des Abstandes zu dem Objekt 2 mittels des Echoverfahrens unter Verwendung des ausgesendeten Schallpulses 10 mit der eingestellten Ausgangsleistung.

## Beschreibung

### STAND DER TECHNIK

Die vorliegende Erfindung betrifft ein Abstandsmessverfahren. Ferner betrifft die vorliegende Erfindung eine entsprechende Abstandsmessvorrichtung, insbesondere eine Abstandsmessvorrichtung zur Verwendung in einer Einparkhilfevorrichtung.

Eine der Erfindung zugrundeliegende Problematik wird nachfolgend beispielhaft für eine Einparkhilfevorrichtung beschrieben.

Eine Einparkhilfevorrichtung ist unter anderem aus der DE 42 08 595 A1 und der DE 196 45 339 A1 bekannt. Die Einparkhilfevorrichtung misst den Abstand zu einem möglichen Hindernis basierend auf einer Laufzeitmessung eines ausgesandten Ultraschall-Signalpulses. Unterschreitet ein bestimmter Abstand zu einem Objekt einen kritischen Wert, wird eine Kollisionswarnung ausgegeben.

In der Einparkhilfevorrichtung wird typischerweise ein elektro-akustischer Signalwandler verwendet, der zugleich zum Senden und Empfangen von Ultraschall-Signalpulsen verwendet wird. In aufeinanderfolgenden Zeitfenstern werden Ultraschall-Signalpulse gesendet oder empfangen. Die Zeitfenster dürfen sich nicht überlappen, da sonst scheinbar vorhandene Objekte bestimmt werden.

Nach dem Aussenden eines Ultraschall-Signalpulses schwingt der elektro-akustische Signalwandler nach. Dieses Nachschwingen muss ausreichend abgeklungen sein, bevor ein Zeitfenster zum Empfangen von Ultraschall-Signalpulsen beginnt. Ansonsten werden scheinbar vorhandene Objekte bestimmt.

Die Zeitspanne innerhalb der das Nachschwingen des elektro-akustischen Signalwandlers auf einen vernachlässigbaren Wert abklingt, begrenzt den minimalen Abstand innerhalb dessen die Einparkhilfevorrichtung ein Objekt erkennen kann. Typischerweise liegt der minimal erfassbare Abstand im Bereich von 10 cm. Dies hat zur Folge, dass Objekte, die sich näher als 10 cm zu einem Kraftfahrzeug befinden, und damit Objekte, die potentiell für eine Kollision in Frage kommen, von der Einparkhilfevorrichtung nicht erfasst werden können.

Es besteht ein erheblicher Bedarf nach einer Einparkhilfevorrichtung und einer entsprechende Abstandsmessvorrichtung die Objekte in geringen Abständen erfassen bzw. geringe Abstände zu Objekten bestimmen können.

### OFFENBARUNG DER ERFINDUNG

Die vorliegende Erfindung mit den Merkmalen des unabhängigen Patentanspruchs 1 schafft ein Abstandsmessverfahren, das den Abstand zu Objekten in geringer und großer Entfernung zuverlässig bestimmen kann. Die Erfindung stellt ferner eine Abstandsmessvorrichtung bereit, mit der das erfindungsgemäße Verfahren durchgeführt werden kann.

### Erfindungsgemäß sind folgende Verfahrensschritte vorgesehen:

Generieren eines Schallpulses, insbesondere eines Ultraschallpulses, mit einer Sende- und Empfangseinrichtung für ein Echoverfahren;
Einstellen der Ausgangsleistung des Schallpulses in Abhängigkeit eines zu untersuchenden Abstandbereichs von Abständen zwischen der Sende- und Empfangseinrichtung und einem Objekt;
Aussenden des Schallpulses mit der eingestellten Ausgangsleistung; und
Bestimmen des Abstandes zu dem Objekt mittels des Echoverfahrens unter Verwendung des ausgesendeten Schallpulses mit der eingestellten Ausgangsleistung.

Eine Weiterbildung der vorliegenden Erfindung besteht darin, die Ausgangsleistung des ausgesendeten Schallpulses anzupassen. Die Anpassung erfolgt dahingehend, ob ein Objekt in geringem oder großem Abstand erfasst werden soll, bzw. der Abstand zu diesem Objekt bestimmt werden soll.

Es zeigt sich, dass bei einer geringen Ausgangsleistung ein Nachschwingen eines elektro-akustischen Signalwandlers der Sende- und Empfangseinrichtung verhältnismäßig schneller abklingt, als bei einer hohen Ausgangsleistung. Folglich kann der zeitliche Abstand zwischen einem Zeitfenster zum Aussenden des Schallpulses und einem zweiten Zeitfenster zum Empfangen von reflektierten Signalanteilen des Schallpulses verringert werden. In Konsequenz können geringere Abstände zu einem Objekt bestimmt und erfasst werden.

In einer Ausgestaltung ist vorgesehen, die Ausgangsleistung derart einzustellen, dass ein Nachschwingen der kombinierten Sende- und Empfangseinrichtung nach dem Aussenden des Schallpulses innerhalb der doppelten Laufzeit des ausgesendeten Schallpulses zu dem Objekt unter einen Schwellwert abklingt.

Gemäß einer Weiterbildung wird die Ausgangsleistung für einen nahen Abstandsbereich mit geringen Abständen geringer eingestellt als die Ausgangsleistung für einen fernen Abstandsbereich mit großen Abständen. Die entsprechenden Ausgangsleistungen können als vordefinierte Werte in einer Tabelle abgelegt werden und bei Bedarf ausgelesen werden.

In einer besonders bevorzugten Ausgestaltung wird zuerst ein Schallpuls mit einer geringen Ausgangsleistung zum Bestimmen des Abstands zu einem Objekt in dem nahen Abstandsbereich eingestellt, und danach ein Schallpuls mit einer großen Ausgangsleistung des Abstands zu einem Objekt in dem fernen Abstandsbereich eingestellt. Hierdurch werden zuerst die potentiell kritischen Objekte nahe zum Beispiel einem Kraftfahrzeug bestimmt, sodass eine unmittelbare Kollision vermieden werden kann. Mit der Änderung der Ausgangsleistung kann auch der Abstand zwischen dem ersten Zeitfenster zum Aussenden des Schallpulses und dem zweiten Zeitfenster zum Empfangen reflektierter Signalanteile des Schallpulses von einem geringen Wert auf einen großen Wert entsprechend der geringen Ausgangsleistung und der großen Ausgangsleistung geändert werden.

Gemäß einer Ausgestaltung wird die Ausgangsleistung schrittweise abgesenkt, wenn das Objekt als in dem nahen Abstandsbereich befindlich bestimmt wird. Beim Einparken besteht eine typische Situation darin, dass sich ein Kraftfahrzeug schrittweise einem vor ihm oder hinter ihm befindlichen weiteren Fahrzeug nähert. Durch die schrittweise Anpassung wird fortlaufend der minimal erfassbare Abstand erhöht.

### KURZE BESCHREIBUNG DER ZEICHNUNGEN

Die vorliegende Erfindung wird nachfolgend beispielhaft anhand bevorzugter Ausführungsbeispiele und zugehöriger Zeichnungen beschrieben, in den Zeichnungen zeigen:
Figur 1 zeigt ein Blockdiagramm einer Ausführungsform der Abstandsmessvorrichtung; und
Figur 2 zeigt einen Signalverlauf für eine Erläuterung der Abstandsmessung.

### AUSFÜHRUNGSFORMEN DER ERFINDUNG

Die vorliegende Erfindung wird nachfolgend beispielhaft anhand eines bevorzugten Ausführungsbeispiels und Figuren erläutert.

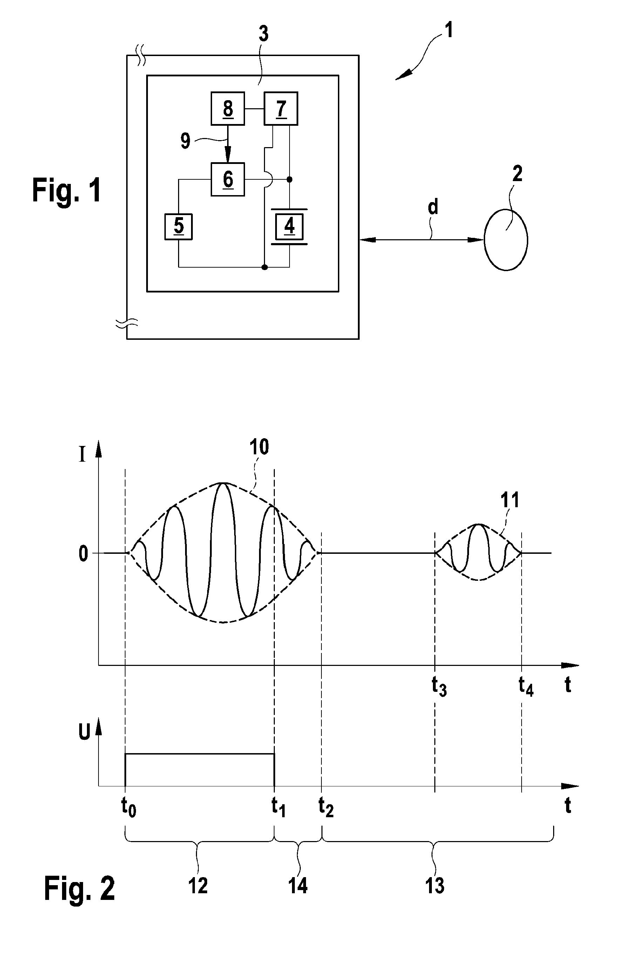

In Figur 1 ist ein Kraftfahrzeug 1 in einem Abstand d von einem möglicherweise kollidierenden Objekt 2 gezeigt. In oder an dem Kraftfahrzeug 1 ist eine Abstandsmesseinrichtung 3 z.B. für eine Einparkhilfevorrichtung oder eine Kollisionswarnvorrichtung angeordnet. Zweckmäßigerweise sind die Sensoren der Abstandsmessvorrichtung 3 im Bereich der Stoßdämpfer oder anderer vorspringender Oberflächen des Kraftfahrzeuges 1 angeordnet.

Die Abstandsmessvorrichtung 3 weist einen elektro-akustischen Wandler 4 als kombinierte Sende- und Empfangseinrichtung auf. Dieser Wandler 4 wird zweckmäßigerweise durch eine Membran und einen Aktuator in Form eines Piezo-Elements oder eines Magnet-Alctuators gebildet. Der Wandler kann einerseits elektrische Signale, die an den elektro-akustischen Wandler 4 angelegt werden, in akustische Signale umwandeln. Andererseits wandelt der elektro-akustische Wandler 4 auch eingehende akustische Signale oder Ultraschall-Signale in entsprechende elektrische Signale um.

Ein Signalgenerator 5 ist zum Erzeugen elektrischer Signal-Pulse vorgesehen, die durch den elektro-akustischen Wandler 4 in entsprechende Schallpulse umgewandelt werden. Zwischen dem Generator 5 und dem elektro-akustischen Wandler 4 ist ein einstellbares Verstärkungsglied 6 oder ein einstellbares Dämpfungsglied angeordnet, das die elektrischen Signale auf vordefinierte Pegel erhöht bzw. abschwächt, bevor sie an den elektro-akustischen Wandler 4 weitergeleitet werden. Auf diese Weise werden Schallpulse mit einer definierten Ausgangsleistung oder Signalstärke erzeugt.

Der von dem elektro-akustischen Wandler 4 ausgesendete Schallpuls legt die Wegstrecke mit der Länge d zu dem Objekt 2 zurück, wird an diesem teilweise reflektiert und die reflektierten Schallpulsanteile gelangen zum Teil zu dem elektro-akustischen Wandler 4. Der elektro-akustische Wandler 4 erzeugt ansprechend auf die reflektierten Schallpuls-Anteile ein elektrisches Signal. Dies wird durch eine geeignete Beschaltung einer Erfassungseinrichtung 7 zugeführt. Die Erfassungseinrichtung 7 bestimmt die Laufzeit des Schallpulses, die seit dem Aussenden des Schallpulses bis zum Eintreffen der reflektierten Schallpuls-Anteile vergangen ist. Aus der Laufzeit kann unter Berücksichtigung der Schallgeschwindigkeit dann der Abstand des Objekts 2 zu dem Kraftfahrzeug 1 bzw. dem elektro-akustischen Wandler 4 bestimmt werden.

Die Verstärkung oder Dämpfung der elektrischen Signale von dem Generator 5 durch den Verstärker 6 ist einstellbar. Eine Steuereinrichtung 8 steuert durch Steuersignale 9 die entsprechende Verstärkung oder Dämpfung. Dabei wird die Verstärkung reduziert, wenn die Objekte 2 mit geringem Abstand d sich vor dem Kraftfahrzeug 1 oder dem entsprechenden elektro-akustischen Wandler 4 befinden.

Die Maßnahme der Reduzierung der Ausgangsleistung von ausgesendeten Schallpulsen bei nahe dem Fahrzeug 1 befindlichen Objekten 2 wird nachfolgend unter Zuhilfenahme der Figur 2 erläutert. In Figur 2 ist die Amplitude I einer Auslenkung einer Membran des elektro-akustischen Wandlers 4 über die Zeit t aufgetragen. Zwischen einem Zeitpunkt t₀ und einem Zeitpunkt t₁ wird ein Spannungspuls U an den elektro-akustischen Wandler 4 durch den Signalgenerator 5 angelegt. Hierdurch wird die Membran angeregt und formt einen Schallpuls 10. Die Trägheit der Membran sowie des elektro-akustischen Wandlers 4 bedingt, dass die Membran auch nach der Beendigung t₁ der Anregung durch das elektrische Signal noch bis zu dem Zeitpunkt t₂ nachschwingt.

Zwischen den Zeitpunkten t₃ und t₄ trifft ein von dem Objekt 2 reflektierter Anteil des Schallpulses auf die Membran des elektro-akustischen Wandlers 4 auf. Dabei wird die Membran zu Schwingungen angeregt. Der elektro-akustische Wandler 4 wandelt diese Schwingungen dann in ein elektrisches Signal um.

Damit gesendete Schallpulse 10 von empfangenen Schallpulsen 11 unterschieden werden können, wird ein Sende-Zeitfenster 12 und ein Empfangs-Zeitfenster 13 festgelegt. Während des Sende-Zeitfensters 12 ist die Auswerteeinrichtung 7 von dem elektro-akustischen Wandler 4 entkoppelt und während des Empfangs-Zeitfensters 13 ist der Generator 5 von dem elektro-akustischen Wandler 4 entkoppelt. Zwischen dem Sende-Zeitbereich 12 und dem Empfangs-Zeitbereich 13 wird für eine Zeitspanne 14 weder gesendet noch empfangen. Diese Zeitspanne 14 entspricht der Dauer des Nachschwingens zwischen den Zeitpunkten t₁ - t₂. Hierdurch wird vermieden, dass scheinbare Objekte aufgrund der Nachschwinger des gesendeten Schallpulses erfasst werden.

Die Dauer des Nachschwingens zwischen den Zeitpunkten t₁ und t₂ hängt unter anderem von der maximalen Amplitude der Schwingungen der Membran des akusto-elektrischen Wandlers 4 ab. Je größer die Amplitude ist, umso ausgeprägter sind die Nachschwinger. Dementsprechend muss bei einer großen Ausgangssendeleistung des elektro-akustischen Wandlers 4 die Zeitspanne 14 lang gewählt werden.

Die Dauer der Zeitspanne 14 bestimmt den minimal erfassbaren Abstand durch die Abstandsmessvorrichtung 3. Da zur Erfassung von Objekten 2, die sich nahe der Abstandsmessvorrichtung 3 befinden, eine geringe Ausgangssendeleistung ausreicht, wird die Ausgangssendeleistung reduziert, wenn Objekte 2 nahe der Abstandsmessvorrichtung erfasst werden sollen. Somit wird vorteilhaft die Dauer der Nachschwinger reduziert und entsprechend kann die Zeitspanne 14 verkürzt werden. Folglich wird vorteilhafterweise eine Reduzierung des kürzesten messbaren Abstandes erzielt.

Die Einstellung der Ausgangsleistung durch den Verstärker 6 kann nach einem fest vorgegebenen Muster erfolgen. In diesem Fall wird zunächst immer mit einer geringen Sende-Ausgangsleistung des Schallpulses untersucht, ob sich Objekte in unmittelbarer Nähe zu der Abstandsmessvorrichtung 3 befinden. Können solche Objekte nicht erfasst werden, wird die Ausgangssendeleistung erhöht und Objekte in größerer Entfernung erfasst bzw. der Abstand zu diesen Objekten 2 bestimmt. Ein solches Vorgehen ist insbesondere dann von Vorteil, wenn die Abstandsmessvorrichtung 3 neu eingeschaltet wird. Dies erfolgt zum Beispiel beim Starten eines Motors des Kraftfahrzeuges. In solchen Situationen befinden sich typischerweise Objekte 2 in unmittelbarer Nähe zu dem Kraftfahrzeug 1 und der Abstandsmessvorrichtung 3, zum Beispiel wenn das Fahrzeug in einer Parklücke abgestellt ist.

Die Erfassungseinrichtung 7 kann fortlaufend ebenso den Abstand zu Objekten 2 bestimmen. Den Abständen entsprechende Steuersignale werden an die Steuereinrichtung 8 weitergeleitet. Die Steuereinrichtung 8 vergleicht die momentanen Abstände mit vorgegebenen Tabellen und stellt anhand dieser Tabellen eine optimale Sende-Ausgangsleistung ein, indem die Steuereinrichtung 8 den Verstärker 6 ansteuert.

Vorteilhafterweise können zwei oder drei Abstandsbereiche festgelegt werden. Entsprechend werden zwei oder drei verschiedene Ausgangssendeleistung und Zeitspannen 14 zugeordnet.

Der Schallpuls kann eine Trägerfrequenz im hörbaren Frequenzbereich oder vorzugsweise im Ultraschallbereich aufweisen.

## Patentansprüche

1. Abstandsmessverfahren, mit folgenden Schritten:
Generieren eines Schallpulses (10) mit einer Sende- und Empfangseinrichtung (4) für ein Echoverfahren;
Einstellen der Ausgangsleistung des Schallpulses (10) in Abhängigkeit eines zu untersuchenden Abstandbereichs von Abständen (d) zwischen der Sende- und
Empfangseinrichtung (4) und einem Objekt (2);
Aussenden des Schallpulses (10) mit der eingestellten Ausgangsleistung; und
Bestimmen des Abstandes (d) zu dem Objekt (2) mittels des Echoverfahrens unter Verwendung des ausgesendeten Schallpulses (10) mit der eingestellten Ausgangsleistung.

2. Abstandsmessverfahren nach Anspruch 1, wobei die Ausgangsleistung derart eingestellt wird, dass ein Nachschwingen der Sende- und Empfangseinrichtung (4) nach dem Aussenden des Schallpulses (10) innerhalb der doppelten Laufzeit des ausgesendeten Schallpulses (10) zu dem Objekt (2) unter einen Schwellwert abklingt.

3. Abstandsmessverfahren nach Anspruch 1 oder 2, wobei die Ausgangsleistung für einen nahen Abstandsbereich mit geringen Abständen geringer eingestellt wird als die Ausgangsleistung für einen fernen Abstandsbereich mit großen Abständen.

4. Abstandsmessverfahren nach Anspruch 3, wobei zuerst ein Schallpuls mit geringer Ausgangsleistung zum Bestimmen des Abstandes zu einem Objekt (2) in dem nahen Abstandsbereich eingestellt wird und danach ein Schallpuls (10) mit großer Ausgangsleistung zum Bestimmen eines Abstandes zu einem Objekt (2) in dem fernen Abstandsbereich eingestellt wird.

5. Abstandsmessverfahren nach Anspruch 3 oder 4, wobei die Ausgangsleistung schrittweise abgesenkt wird, wenn das Objekt (2) als in dem nahen Abstandsbereich befindlich bestimmt wird.

6. Abstandsmessvorrichtung, mit
einer Sende- und Empfangseinrichtung (4) zum Generieren und Aussenden eines Schallpulses (10) für ein Echoverfahren;
einer Steuereinrichtung (4, 8) mit einem einstellbaren Verstärkungs- oder Abschwächungsglied (4) zum Einstellen der Ausgangsleistung des Schallpulses (10) in Abhängigkeit eines zu untersuchenden Abstandbereichs von Abständen (d) zwischen der Sende- und Empfangseinrichtung (4) und einem Objekt (2); und
einer Auswertungseinrichtung (7) zum Bestimmen des Abstandes zu dem Objekt (2) mittels des Echoverfahrens unter Verwendung des ausgesendeten Schallpulses (10) mit der eingestellten Ausgangsleistung.

7. Abstandsmessvorrichtung nach Anspruch 6, wobei die Steuereinrichtung zum Einstellen der Ausgangsleistung eingerichtet ist, derart dass ein Nachschwingen der kombinierten Sende- und Empfangseinrichtung (4) nach einem Aussenden des Schallpulses (10) innerhalb der doppelten Laufzeit des ausgesendeten Schallpulses (10) zu dem Objekt (2) unter einen Schwellwert abklingt.

8. Abstandsmessvorrichtung nach einem der Ansprüche 6 bis 7, wobei die Steuereinrichtung zum Einstellen einer geringen Ausgangsleistung für den Schallpuls zum Bestimmen eines Abstandes zu einem Objekt (2) in dem nahen Abstandsbereich und anschließend zum Einstellen einer großer Ausgangsleistung für den Schallpuls (10) zum Bestimmen eines Abstandes zu einem Objekt (2) in dem fernen Abstandsbereich eingerichtet ist.

9. Einparkhilfevorrichtung mit einer Abstandsmessvorrichtung (3) nach Anspruch 8.

10. Kraftfahrzeug (1) mit einer Einparkhilfevorrichtung nach Anspruch 9.
